# EUROPEAN PATENT SPECIFICATION

(11) **EP 2 326 448 B1**
(45) Date of publication and mention of the grant of the patent: **04.03.2015**
(21) Application number: 09777179.4
(22) Date of filing: 14.07.2009
(51) Int. Cl.: B23D 47/04, B27B 5/065, B23D 59/00, G05B 19/408

(54) **A CONTROL SYSTEM AND ASSOCIATED METHOD FOR CUTTING**
STEUERSYSTEM UND DAMIT VERBUNDENES SCHNEIDVERFAHREN
SYSTÈME DE CONTRÔLE ET SON PROCÉDÉ DE DÉCOUPAGE

(30) Priority: 19.08.2008 EP 08014700
(43) Date of publication of application: 01.06.2011
(60) Divisional application: 11174222.7
(73) Proprietor: De Lille, Arnout, 9990 Maldegem (BE); De Lille, Bern, 9990 Maldegem (BE)
(72) Inventor: De Lille, Arnout, 9990 Maldegem (BE); De Lille, Bern, 9990 Maldegem (BE)
(74) Representative: BiiP cvba
(86) International application number: PCT/EP2009/005109
(87) International publication number: WO 2010/020310

(56) References cited:
- EP-A- 0 891 847
- EP-A- 1 712 966
- EP-A- 1 810 801
- WO-A-99/33600
- DE-U1- 20 107 572
- FR-A- 2 797 332
- US-A- 3 844 426
- US-A- 4 206 670
- US-A- 4 392 401
- US-A- 4 827 446
- US-A- 5 099 896
- US-A1- 2008 155 002
- PREKWINKEL F: "Rechnergeführte Produktionssysteme für die Holzindustrie" HOLZ ALS ROH- UND WERKSTOFF, SPRINGER-VERLAG. BERLIN, DE, vol. 49, no. 12, 1 December 1991 (1991-12-01), pages 457-464, XP002122120 ISSN: 0018-3768

## Description

### Field of the Invention

The present invention generally relates to a method for controlling the cutting of strips out of boards according to the preamble of claim 1. Such a method can be derived from the use of the machine disclosed in WO 99/33 600 A.

### Background of the Invention

Various objects are created out of multiple elements which each are created in a specific way. For instance furniture such as cupboards, closets, tables, etc are made up out of a number of wooden panels, legs or other floor supports, some elements are tiny, some large and small etc. Each wooden panel is created using a cutting process which requires one or more cuttings of a wooden board, single or stacked. Similarly metal objects such as containers may also be made up out of a number of metal panels which are welded or bolted together. Such metal panels can be cut from a larger metal sheet, plate or board using a guillotine shear, saw specifically designed to cut metal or can be obtained by cutting the boards, sheets or plates with a laser, high pressure water jets, shear, etc. Similarly glass can be cut into pieces which can serve as a window in a cupboard, mirror, a door. In general, various elements making up an object can be obtained from a cutting process or a process involving cutting and further processing using tools such as drills, milling machines, CNC machines, knifes, guillotine shears etc.

Each step, be it cutting or further processing, requires a certain amount of time to complete. Unprocessed boards have to be retrieved from storage to be fed to the cutting machines, parts cut from a board have to be provided to the machine responsible for the further processing, waste and unused parts have to be stored, etc. The longer it takes for each step to complete, the more expensive a production gets. A first step towards reducing the amount of time is to have machines which are able to perform certain functions automatically. For instance, instead of having an operator enter each cut manually at the time of performing the cut, the cutting machine may be able to process a complete cutting plan which details all the parts that have to be cut from the board.

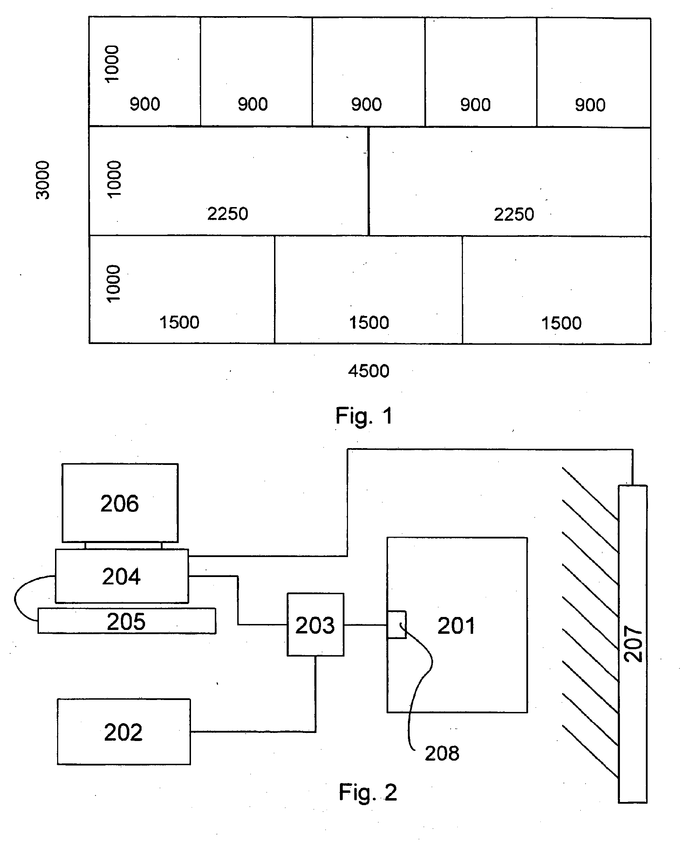

For example, consider a wooden board which has dimensions of 3000mm x 4500mm and which is illustrated by Fig. 1. For a certain product, the board has to be cut into three equal parts of 1000mm x 1500mm, two equal parts of 1000mm x 2250mm and five equal parts of 1000mm x 900mm wide. To achieve this result, an efficient way would be to cut the board into three strips of 1000mm x 4500mm and then divide each of the strips in the three, two or five equal parts respectively. This means that two cuts are needed to create the three strips, two cuts for the three equal parts, one cut for the two equal parts and four cuts for the five equal parts which totals to nine cuts. In this example we neglected trim cuts and cutting thickness. If the original board is larger than 3000mm x 4500mm, additional cuts may be needed to reduce the original board to the appropriate size.

In certain existing solutions, an operator would have to specify each cut when feeding a board or strip to the machine. In other words, the operator would place the board of 3000mm x 4500mm on the machine and use the control panel of the machine to enter the dimensions where each cut has to be made. Then the operator would feed the first strip and enter the dimensions for each part of that strip, etc. Alternatively a complete layout of the board and the pieces that have to be cut from the board can be entered into the machine, for instance by an operator prior to starting the cutting process or automatically when the cutting machine supports computer aided manufacturing or is equipped with a processor to handle such layouts. In such case, an operator's interaction may be limited to feed boards and strips and retrieving strips and pieces from the machine. We refer to this solution as machines provided by Pattern Cutting programming. The latter solution is available on various existing machines and can lead to a reduction in time when cutting rips and parts from a board. In addition to reducing the time, the latter solution also reduces the chances of errors. When an operator has to enter the dimensions for each cut manually, he may enter incorrect values which results in cuts that are unneeded and thus additional waste or excessive material. The automated cutting machines are designed to take a cutting layout and process the layout hierarchically on a level-by-level basis. This means that the existing cutting machines can take a board which is cut into rips which form the first level and each strip is further processed into smaller parts which forms a second level and these smaller parts can be processed even further in a third and subsequent levels. In a typical setup, a board enters the cutting device and strips are obtained from the cutting device, then each strip is in turn cut into smaller parts which in turn can also be further processed. Various embodiments exists wherein the first rip that is obtained is fed back into the machine for further processing or wherein the last strip is fed back into the machine first for further processing. When angular beam saws are used, which are saws with two cutting axis positioned under an angle from each other, it is possible to invert a layout in order to combine the last strip from the first stack with the first strip from the second stack. However, this is only done for identical strips and a need for an identical further processing of such strips. In addition, an angular beam saw is a more complex cutting device which can cut a strip via the first saw on the first axis and then process a strip immediately thereafter using the second saw on the second axis.

Each cut requires a certain time to complete as the board or strip has to be fed into the cutting machine, the cuts have to be made and the result has to be removed from the machine. In addition, any waste or unused material has to be recovered and be disposed of or stored. For this example it is assumed that each cut takes 15 seconds and that adding a board or strip to the machine and removing the parts takes 30 seconds for each board or rip. In the above example that results 135 seconds of cutting time for nine cuts, 30 seconds to feed the board and retrieve the strips, 30 seconds to feed the first strip and retrieve the three equal parts, 30 seconds to feed the second strip and retrieve the two equal parts and 30 seconds to feed the third strip and recover the five equal parts which in total is 255 seconds for processing the board into the required pieces. If a second board has to be turned into exactly the same parts as in the above example, it could take up to twice as long when each of the boards is cut individually.

International Patent Application WO 99/33600 entitled "Method and Machine for Sawing Panels with Laterally Movable Pusher" describes the mechanical structure of a panel sawing machine consisting of a horizontal table (5), and pushers (6, 6a) that push a stack of panels in forward or reverse direction to a sawing device (7, 7a) for lengthways and crossways simultaneous cutting. The system described in WO 99/33600 does not stack boards or rips in between for further processing. The boards or strips are processed in FIFO (First-In-First-Out) order. Although it is possible to simultaneously feed two or more panels, placed side by side, to a saw for cutting, there is no in-between stacking for further equal processing. The simultaneous processing is obtained through a rather complex mechanical structure with grippers (161t) that hold/move several boards to cut them crossways.

European Patent Application EP 0 891 847 entitled "A System for Defining and Making Wooden Furniture Panels" describes a system for sawing panels with in between storage (storage station 10) for further processing. The in between stacking of strips with equal width in EP 0 891 847 however serves for gluing together such strip elements of equal width (6a, 6b) in order to form a continuous strip, that is then cut crossways into strips of predefined lengths. In other words, there is no in between stacking in order to optimize the further processing of strips to reduce cutting cycles. After storage, only panels of an equal width are processed by the machine of EP 0 891 847.

In summary, existing solutions require a certain amount of time to process boards, rips or parts. It is desirable to keep the amount of time limited in order to have a high production rate, which is cost efficient for a production facility and means that more final products can be realized in the same time frame. Simultaneous processing of multiple boards has been suggested but requires complex mechanics and remains limited to crossways cutting of boards in first-in-first-out (FIFO) order per board.

In addition to a time requirement, the cutting of materials also impose problems on the processing equipment such as saws, lasers, etc. A saw is a way of physically dividing a piece of material in two pieces by brute force. Saws spinning at high speed rip through the material and remove a bit of material between the two pieces. Although a saw is much stronger than the material itself, there is always some wear on the saw blade. This is especially the case when cutting hard materials such as stones or metal plates or sheets. Other cutting techniques such as a laser are less prone to the effects of wear because there is no physical contact between the material that is cut and the cutting device or there is no tearing apart of the material. However materials such as lasers, water-jet based systems, etc. require a significant amount of power in order to operate. Consequentially, reducing the number of cuts while cutting a material in pieces does not only reduce the time requirement in order to obtain the required pieces, it can also reduce the costs for repairing or replacing worn down equipment and the power consumption.

Another element in the production process of pieces via cutting processes is waste management. The above given example was based on a board which has a dimension that perfectly fits the needs of the finished pieces. However, if the initial board had a dimension of 4000mm x 6000mm, additional cuts would be necessary to reduce the board to 3000mm x 4500mm. These additional cuts may result in a piece of 1000mm x 6000mm and a piece of 3000mm x 1500mm or a piece of 1000mm x 4500mm and a piece of 4000mm x 1500mm. Either way, these two pieces would not be used in this example and are therefore considered as excess. The excess material can be used for future layouts which are made out of the same material and require strips and pieces which can be obtained from the excess material. However, if the excess material is too small, it is considered waste and can be In view of the present invention, excess material is any material that is left over from cutting a board, strip or part which can be used at a later point in time and waste or waste material is material which is left over from cutting a board, strip or part which cannot or will not be used at a later point in time and which is discarded.

In addition to the factors described above, the machines which are used for processing the materials themselves may be subject to problems as well. The above described factors and problems are present regardless of the machines that are used for the cutting and processing of the materials. Manually entering dimensions or automatically configuring a machine with a layout does not reduce the time it takes to feed the machine or the time it takes for all the cuts to complete nor does it change wear or power consumption or the waste management. However, older machines such as those which have a control panel which is based on switches, levers and buttons and is not computerized may not be able to provide the same functions to an operator as a computerized machine. For instance, cutting using layouts requires certain processing capacities on the cutting machine which are typically not present in a non-computerized machine which has a start/stop button, buttons to enter dimensions and a few status lights and other control buttons. It would therefore be advantageous to be able to upgrade existing machines to support new control devices without significant investments in new machines or changes to the control systems of the existing machines. New control devices could either replace existing control panels for the machines or may interact with the machines in combination with or in addition to the existing control devices.

This shows that various problems exist with today's machines for cutting materials and devices for controlling such machines.

An objective of the present invention is to provide a control system for cutting materials which is able to reduce the time wherein all cuts are made. Another objective of the present invention is to reduce the amount of waste resulting from the cutting of materials and to facilitate the re-use of excess material. Another objective of the present invention is to enable existing devices to support the control system of the present invention and to enable existing devices to support other additional control functionality. Another objective of the invention is to cut the boards, rips and/or parts in such a way that further operations on the boards, rip and/or parts are possible and more accurate and that also assembling is taken into account.

### Summary of the Invention

The objectives of the present invention are realized by a method having the features of claim 1.

Further preferred embodiments are defined by the features of claims 2 - 8.

### Brief Description of the Drawings

Fig. 1 illustrates a layout for cutting a board into rips and parts;
Fig. 2 illustrates an overview of a scenario wherein an embodiment of the present invention is used;
Fig. 3 illustrates a view of an embodiment of a conversion device according to the present invention;
Fig. 4a - 4c illustrate the steps in an embodiment of the present invention wherein the layout is optimized;
Fig. 5a and 5b illustrate a number of layouts wherein certain rips can be stacked; and
Fig. 6 illustrates the advantage of combining layouts according to the present invention.

### Detailed Description of Embodiment(s)

Fig. 1 shows a cutting plan of a board of 4500mm wide and 3000mm high out of a material such as wood, metal or glass and the layout of the parts in which the board has to be divided. Fig. 1 does not take into account the thickness of the saw blade or the width of a cut while cutting the board. This means that in a real scenario, it would be impossible to divide a board of 3000mm high into three strips of 1000mm high as the thickness of the saw blade would create a cut of for instance 3mm wide. However this is irrelevant to illustrating existing solutions and the advantages of the present invention as was done above.

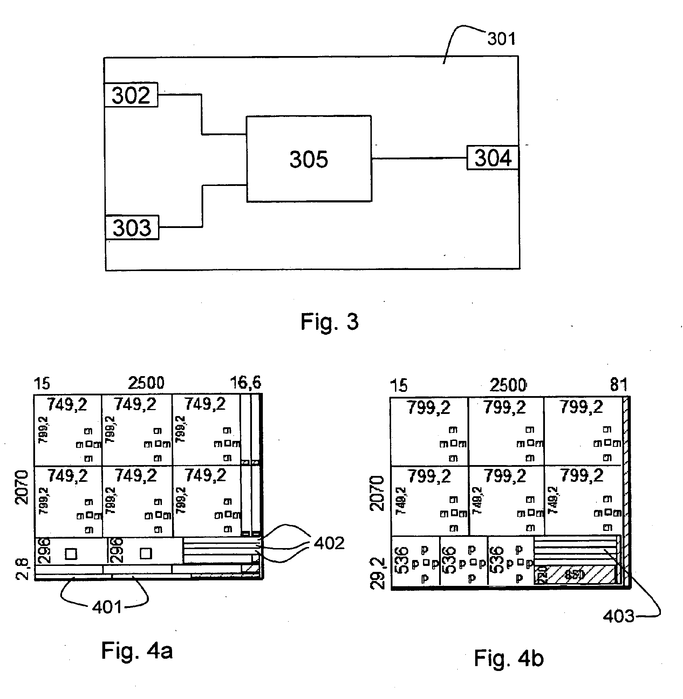

Fig. 2 illustrates a scenario wherein an embodiment of the system of the present invention is used. It illustrates a cutting device 201 such as a machine for cutting wooden boards and strips using a fast spinning saw blade. The cutting device 201 has a control panel 202 which is coupled to the control interface 208 of cutting device 201 via a conversion device 203. In this particular example, the conversion device 203 is placed in the cable which used to connect the control interface 208 of cutting device 201 with the control panel 202 directly as a controlled T-junction. The conversion device 203 is furthermore coupled to a computer 204 which executes an embodiment of the control module of the present invention as a software program. The conversion device 203 and an embodiment of such a conversion device will be described below with respect to Fig. 3. The computer 204 is coupled to an input device such as keyboard 205 and an output device such as display 206. Fig. 2 further also shows a storage 207 whereon boards and strips can be stored and the operation of which can be controlled by the computer 204. The computer 204 may be coupled to the storage 207 via a direct link or the computer may be coupled to the storage 207 via an intermediate device such as conversion module 203 or cutting device 201. The latter may be particularly the case when the storage 207 is part of the cutting device 201.

The control panel 202 can be a basic control panel with a start/stop button, an emergency stop button, status lights indicating whether the machine is powered on, stand-by, active or that an error has occurred, an alphanumeric keypad to configure a certain layout for a board and controls for adjusting device settings such as saw speed, position of the blade, etc. The control panel 202 also allows an operator to define how a board or strip has to be cut manually. Any key-press on control panel 202 results in a specific signal that is transmitted to the control interface 208 of cutting device 201. The control panel 202 may however also be a regular keyboard and mouse which are well known in the art or may be a computerized control panel based on a Programmable Logic Controller (PLC), personal computer, etc.

The computer 204 is in this particular example a personal computer which has a number of software application installed thereon and which is able to execute the software applications and their instructions in order to control the cutting device 201 as if operated by control panel 202. A first software application is an application which is able to analyse one or more layouts and send the appropriate instructions to the cutting device 201. A second simultaneously executed software application is an application which instructs the operator on how the layout has to be executed which includes instructions to feed boards and rips into the device 201, retrieve rips and parts from the device 201, stack boards or strips, move boards, rips or parts to storage 207 or retrieve items from storage 207, etc. A third optional application is a storage management application which is able to track the items such as boards, strips and parts that are added to or removed from the storage 207 and which is able to authorize additions and removals. Although not shown in Fig. 2, the computer 204 may also be coupled to a printer which delivers tags that can be placed on the boards, rips and parts for easier storage management.

The computer 204 presents the instructions via display 206 to the user in a graphical or textual way. The computer may further also be coupled to an audio system to provide audible instructions or warnings to the user. The computer may also be coupled to one or more additional displays or light systems to signal the user. For instance, a bar with a red, an orange and a green light may be positioned visible to the operator, for instance near the computer 204 or near the storage 207. The light system is used to indicate whether an action is performed correctly using for instance the green light, whether an action is performed wrong using for instance the red light or whether some error has occurred using for instance the orange light. Of course other colours and uses of lights are also possible. For instance the orange light may be omitted and a red steady burning light can indicate the wrong performance of an action whereas a flashing red light with or without an audible signal may indicate an error. The lights or other additional displays can also be used to notify a user that it is allowed or not allowed to remove a certain item from the storage or add a certain item to the storage at a certain location.

The keyboard 205 enables a user to provide input to the computer 204. Such input can be an instruction to move to the next step in cutting the layout because a certain part has been completed, look ahead to the next few steps in order to know what is coming up, etc. These instructions may however also be received by computer 204 from control panel 202 via the conversion device 203. The keyboard 205 can also be used to load a new layout or change a layout. The computer 204 can feature other input devices as an alternative for or in addition to keyboard 205. Other input devices such as a mouse or a dedicated control panel can be connected to the computer 204 and used to instruct the computer 204 and control the applications executed thereon.

During the processing of the materials, an operator may need to temporarily store one or more boards, rips or parts. The operator can store these items in storage 207. The storage 207 is in this particular example made up out of a number of shelves, vertical seperations or an automated stacking system. The orientation of the seperations is less relevant. In order to facilitate the tracking and management of the stock and the items in the storage 207, the locations may have an identifier such as a bar code or an RFID tag attached thereto. These tags, in combination with tags or identifiers placed on the items, allow for an easy tracking of items and their allocation in the storage 207.

The storage management application on computer 204 may be coupled to a scanner which can retrieve the identifications from the tags on the shelves and items. This way, the computer 204 can determine which parts are currently needed for processing and which parts the operator intends to use or retrieve for processing. If these two match, the computer can indicate to the user that the use is acceptable, otherwise the computer 204 may signal to the user that an item is not acceptable or allowable for a certain action. The storage management application on computer 204 may further also be able to control the storage 207 when the storage is an automated storage system such as a hedgehog storage or an automated multi-level stacking device. The storage management application can ensure that the appropriate storage location is presented to a user when adding or removing parts from the storage 207.

It is noted that the storage management with visible indicators such as lights or a display screen and/or an audible signal may be used indepently from the system of the present invention. In particular, the visible indicators may also be used to merely track stock of materials in a warehouse and notify users if selected materials may be taken out of storage or not.

It should be noted that as an alternative to having a separate computer 204 which is connected via a conversion module to a cutting device 201, it is also possible to directly connect the computer 204 to the cutting device 201 via the control interface 208 of the cutting device 201. In other words, the computer 204 may also replace the existing control panel 202 for a cutting device. Alternatively, the cutting device 201 may contain a computer system which is able to execute the software of the computer 204. In such case, the cutting device 201 itself may be able to implement embodiments of the present invention. The control panel 202 is another alternative whereon an embodiment of the present invention may be executed. In general, it is irrelevant where an embodiment of the present invention is executed. Every existing setups has advantages. Connecting a computer to an older device via a conversion module extends the abilities of the existing device whereas integrating embodiments of the present invention into cutting devices or control panels reduces the need for additional hardware.

Fig. 3 illustrates a block diagram of a conversion device 301 which for instance can be used as conversion device 203 in Fig. 2. The conversion device 301 in this particular embodiment consists of two input connectors 302 and 303, an output connector 304 and a processing module 305 which interconnects the input connectors 302 and 303 to the output connector 304.

In a basic embodiment of the conversion device 301, the processing module 305 can be made up out of a buffer wherein input from either inputs 302 and 303 is stored until the input is sent to the output 304. The conversion device 301 may also contain an external switch to select on one of the inputs 302 and 303 and then the conversion device 301 accepts data from that input. However, it is beneficial to have a conversion device wherein both inputs 302 and 303 are equally and wherein signals can be sent on both inputs 302 and 303 simultaneously or sequentially. Such a basic version can be used for instance in systems where the devices connected to the conversion module are able to send data in the appropriate format for the device connected to the output 304.

In an alternative embodiment, the conversion device may contain a number of external buttons or switches which can be used to send instructions to the cutting device. These buttons or switches may be similar to buttons and switches found on the control panel of a cutting device such as a button to move on to the next step in a sequence, to stop the process, etc.

Of course, it should be taken into account that certain commands may need a priority over other commands or instructions. For instance, a press on the emergency stop button should be accepted by the cutting device over any other instruction from any other control device or control module. This can be achieved by having a processor in the conversion device 301 which is able to detect the input signal and transmit the signals of the highest priority to the cutting device first. Alternatively, any signal from the inputs 302 and 303 may be relayed to the output 304 and the cutting machine is able to prioritize certain instructions over other instructions.

In a more advanced embodiment of the conversion device 301, the processing module 305 can contain a processor and a memory with instructions for the processor or a microcontroller with instructions embedded thereon. The instructions for the processor or microcontroller can be used to convert instructions received via either input 302 or 303 into a format or syntax that can be processed by the device connected to the output 304. For instance, the instructions obtained from a cutting device controller may be to cut a rip in three pieces of different sizes and may specify those sizes. The conversion module can convert this into absolute or relative coordinates for each cut and provide these positions to the device connected to output 304. The conversion device 301 may also be able to provide feedback to another input in which case inputs 302 and 303 can be considered as two-way interfaces. For instance, if a user presses the button to move on to the next step in the cutting plan on control device 202 of Fig. 2, the conversion device may also send a signal to the computer 204 informing the computer of the desire to move on to the next step.

The instructions to be executed by the processor or microcontroller can either define how the conversions are done, for instance by extracting the measurements from a cut instruction or the instructions may be linked to a conversion table wherein an instruction in one format is listed together with the same instruction in another format or syntax. In general, the processor or microcontroller are able to analyse an incoming instruction and send out a corresponding instruction that can be executed by the device connected to the output 304.

Both the inputs 302 and 303 can be made up out of various kinds of connectors. The inputs may be of the same kind of connector or may be of a different kind of connector. For instance, the input 302 can be of a type which is used to connect a control panel to a cutting device whereas input 303 can be of a more generic type that is supported by various computers such as an Universal Serial Bus connector, a Serial line connector, a Firewire or IEEE 1394 connector, an RJ-45 or an RJ-11 connector, etc. Alternatively, the connector may also be a keyboard and/or mouse connector, in order to connect an external keyboard and/or mouse to a cutting device. The connectors may also be made up out of two parts, one part which is fixed to the housing of the conversion device 301 and one part which can be removed from the conversion device 301. This way it is possible to change the physical connectors available on the conversion device 301 by replacing the removable part by another type. For instance, the part connected to the housing may be made up out of a proprietary connector and the removable part may feature the same proprietary connector on one side and an USB connector on the other side. A second removable part may feature the proprietary connector on one side and an IEEE 1394 connector on the other side. This way, it is possible to have both an USB connector or an IEEE 1394 connector without needing an additional conversion device or a different conversion device. Changeable connectors may however need support in the processing module 305 and the removable parts may need some internal electronics to adapt signal levels from various specifications to a uniform signal level that is used within the conversion device. Of course, a similar approach can also be used on the output connector.

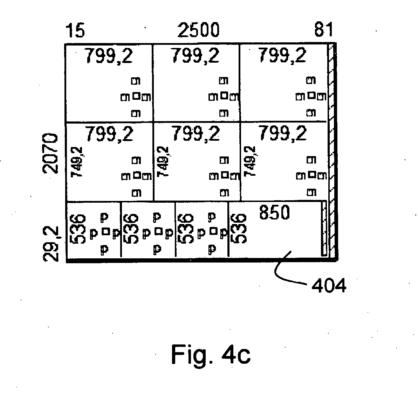

Fig. 4a illustrates the initial cutting plan or layout for a board of 2500mm wide and 2070mm high. The layout consists of several strips which are further divided into several pieces. However, the layout as shown in Fig. 4a is not optimal. In particular, the strip from which the pieces indicated by 401 are to be cut is narrow and the final cut of that strip into the individual parts 401 is difficult to cut because the narrow side of the rip with parts 401 has to be placed into the clamps of the cutting device. The layout of Fig. 4a however has three more pieces at 402 which are the same as the two pieces at 401. The small strips in 401 can be left without doing the second level cuts. Re-optimization, having the user specifying parts cutting orientation for those parts as having them as last side to be cut the long side. The more optimal layout is shown in Fig. 4b wherein the five equal pieces are grouped at 403. In 403, all of the similar pieces with a narrow width are placed below each other. If the boards with these five parts is cut from the strip of 536 wide, the final cut of that part into the five pieces is along the long side of the pieces. In other words, the orientation of the final cut for pieces 401 from 4a is altered into an orientation which is more convenient to cut, the longest side. The waste at the bottom of 403 is needed in order to clamp the part in the cutting device to obtain the five narrow strips. The more optimal layout can also be split as far as the cutting sequence is concerned as shown in Fig. 4c wherein a large part 404 is cut from the last strip of the board. The large part 404 can then be re-cut as shown as 403 in Fig. 4b after the application of edge banding on the block 404 left and right. Of course such optimization may result in strips or pieces which can no longer be obtained from the same board. However, it may be possible to move certain pieces to other boards in order to obtain all required pieces when all layouts are cut with the use of more or less material.

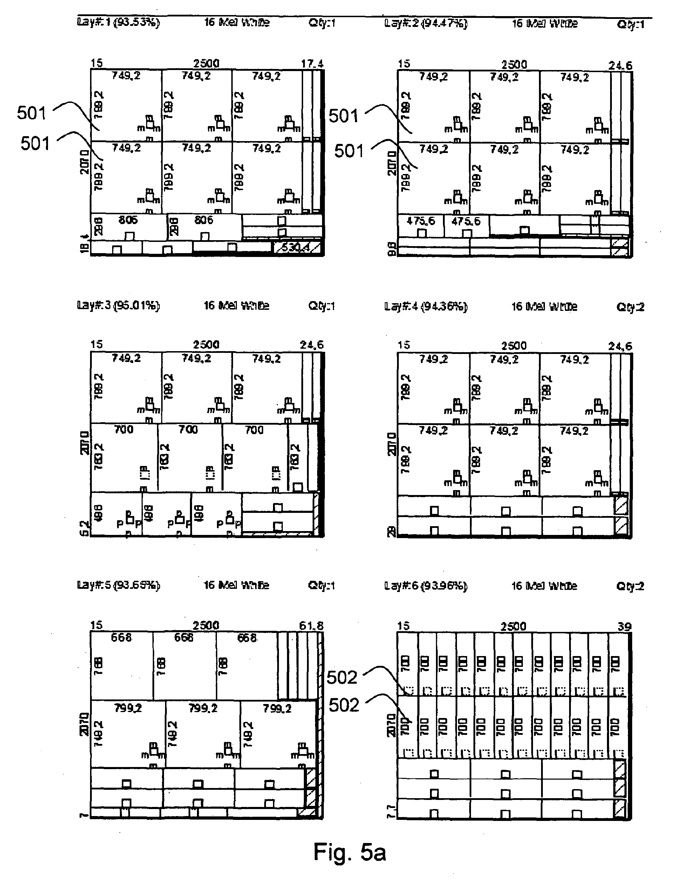

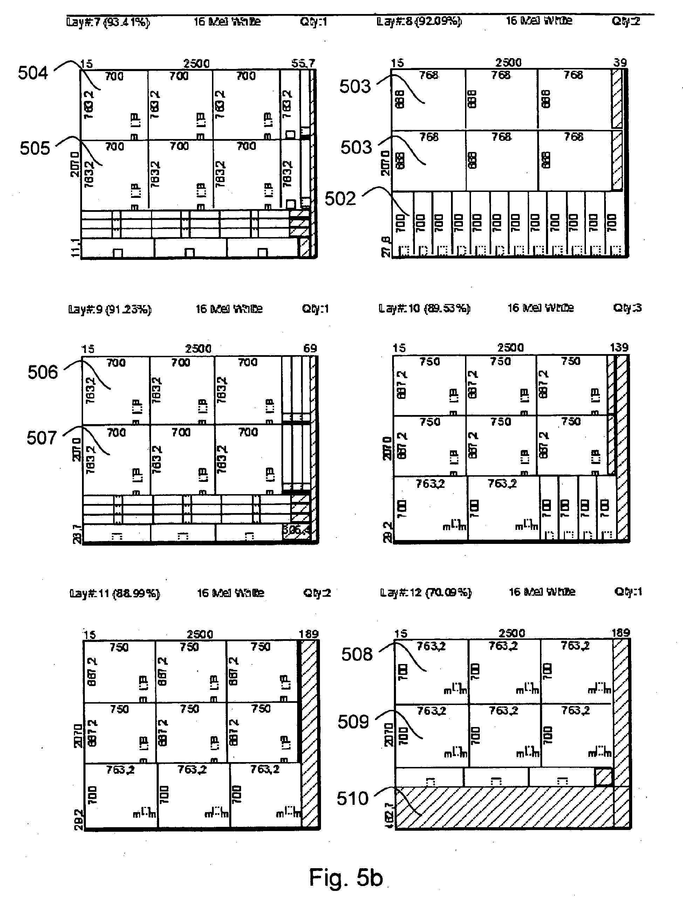

Fig. 5a and 5b show a number of layouts which have to be cut in order to build the cupboards for a kitchen. Each individual layout is characterized by a number of parameters which are shown above the layout. For instance, the first layout is characterized by "Lay#: 1(93.53%) 16 Mel White Qty: 1". The *Lay#: 1* represents the number of the layout which in this particular case is 1. The percentage indicated after the layout number between brackets is the amount of the board that is used. In this particular example, 93.53% of the board is used and only 6.47% is waste material which can be discarded. The waste material is indicated on the layout via a hashing. *16 Mel White* is an identification of the type of material from which the layout has to be cut. In this particular, the layout is cut from a board with a thickness of 16mm and a White Melamin colour. The *Qty: 1* indicates the quantity of the board or in other words the amount of times a particular pattern is needed. Each of the other layouts has similar markings to indicate their number, the percentage of board used, the material and the number of boards. Furthermore, on each layout, the numbers indicate the length of a side of a part, strip or board in millimetres. For instance the first layout is cut from a board with a total dimension of 2070mm x 2500mm. Within certain parts of the layouts shown in Fig. 5a and 5b, a small square is shown with one or more letters around it. The square represents the part itself and the letters indicate which type of finishing or edge banding that is required on that side of the part. For instance an 'm' indicates melamin and a 'p' indicates a PVC edge. Similar markings are used in Fig. 1, Fig. 4a - 4c to indicate the size of the boards, rips or parts.

Layouts 1 and 2 both contain two strips 501 from which three pieces of 749,2mm x 799,2 mm have to be cut. Since both layouts are cut from the same kind of boards, *16 Mel White* or even when cut from different kinds of boards, it is possible to stack these boards even if certain restrictions apply such as no stacking of boards or strips of different materials or with a different thickness. By stacking all the rips 501 from layout 1 and layout 2, it is possible to cut the four rips 501 into the respective smaller parts simultaneously. This means that they are cut as one stack rather than strip by strip.

Another example can be found when looking at layouts 6 and 8. Layout 6 contains two strips 502 which are to be cut into twelve equal pieces and layout 8 contains a single strip 502 which is to be cut into the same twelve equal pieces. It is thus possible to retain the strips 502 from layout 6 in storage until the strip 502 from layout 8 has been cut and then those three rips 502 can be stacked before they are cut into the twelve equal pieces simultaneously. Layouts 6 and 8 each have to be cut twice, it is therefore possible to stack even more strips up to a total of six strips if the cutting machine can handle a stack of that size otherwise several stacks may be aligned next to each other. Cutting the strip 502 from layout 6 into twelve identical pieces takes 11 cuts. Doing this for layout 6 together with the strip 502 from layout 8 does not generate an additional cut. In other words, a single cycle of 11 cuts is sufficient to obtain all the pieces. If the maximum stack size would be four strips, then no advantage can be obtained unless aligning multiple stacks next to each other is allowed.

When looking at the other layouts in Fig. 5a and Fig. 5b, it is possible to spot other strips that can be stacked such as in layout 10 and layout 11. If the maximum stack height is five boards, both layouts 10 and 11 can be stacked to the total of five boards. All first rip widths are the same (667,2mm and 667,2mm and 700mm) and the two first strips 504 are cut together and the last strips 505 and 506 are cut independently which means that except for one rip cutting, the two stacks are cut as one stack.

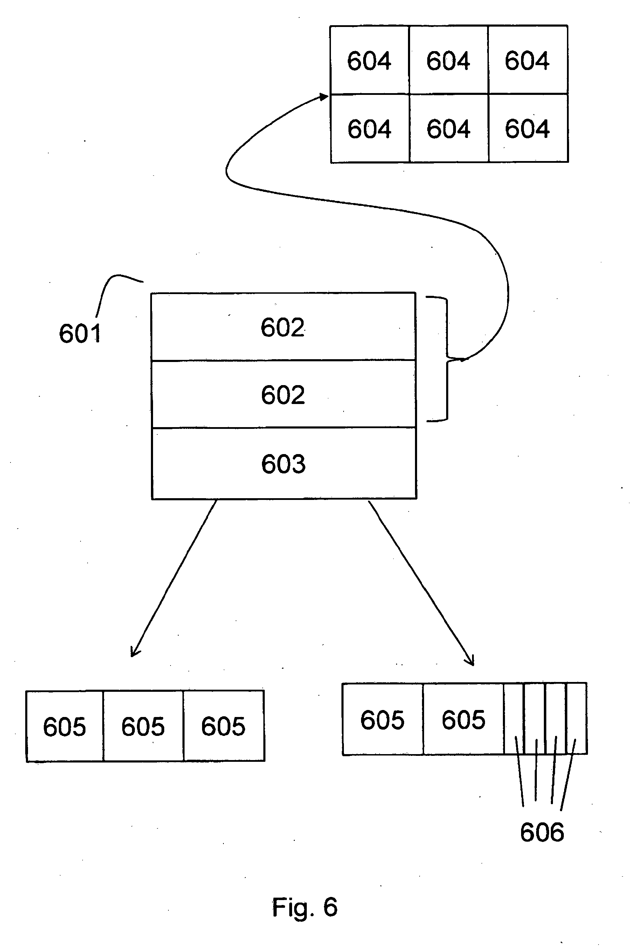

Fig. 6 illustrates the cutting of layouts 10 which is needed three times and 11 which is needed two times in more detail wherein 601 is a representation of the first level cuts that are cut from a stack of 5 boards. In the first level cut, two strips of equal width (667; 2mm) are shown as 602 and the third rip is of different width (700mm) and is shown as 603. The strips of equal size can then be further cut into the smaller pieces 604 (750mm) as two stacks of 5 rips high which are aligned next to each other and cut simultaneously. The third strip of layout 10 and layout 11 cannot be combined for cutting as their last level cuts are different. This means that a stack of three strips 603 is cut into parts 605 as defined by layout 10 and the remaining stack two strips 603 is cut into parts 605 and 606. When both layouts are cut independently, it would require 29 cut cycles to obtain the result. However, by combining layouts 10 and 11 as described above, this can be reduced to 20 cut cycles or a reduction of about 30%.

The present invention however also allows other forms of stacking and optimization of the layouts. For instance, layouts 7 and 9 are nearly identical. The top two strips 504 and 505 of layout 7 are equal to each other and the top two strips 506 and 507 of layout 9 are equal to each other. Because the top two strips of layouts 7 504 and 505 and 9 506 and 507 have the same width, it is possible to interchange strips between layout 7 and 9. In this particular example, the cutting of layouts 7 and 9 can be optimized by placing the second rip 507 of layout 9 in the place of the first strip 504 of layout 7 and vice versa. This way, layout 7 and layout 9 are identical and the boards can be stacked from the start.

Another example is to combine layouts 7, 9 and 12. By rotating the parts of the top two strips 508 and 509 of layout 12, these strips become identical to the top two strips of layouts 7 504 and 505 and of layout 9 506 and 507 without the small parts at the end of each strip. If layout 12 is then cut according to layout 7 or 9, which can be optimized as described above or not, some excess small parts are created. However, it may be acceptable that such parts are discarded in which case layouts 7, 9 and 12 can be combined. This example illustrates that even the current cutting level does not have to be identical when waste 510is available. The subsequent levels are not identical either, but layout 12 has waste which can be turned into excess parts. The subsequent levels of layouts 7, 9 and 12 can thus be processed simultaneously.

The cutting plans as shown in Fig. 5a and 5b can be stored in a graphical representation, similar to the representation which is shown in the figures. Such a graphical representation can be used either for the initial cutting layout or for an optimized cutting layout. However, processing of graphical layouts is difficult to achieve and therefore an alphanumerical storage of the layout may be preferred. Such an alphanumeric storage is a representation of the layouts as a series of numerical values and commands or instructions. For instance, a board of 3000mm x 4500mm can be drawn or can be stored as a node in a tree with a length and a width value. Such a node may have one or more sub-nodes which represents the rips to be cut from the board, each having a length and a width. Similarly, each node or sub-node may also contain one or more commands. Such a command can be cut, store, stack, etc but may also be a jump to another node, sub-node or command. The sub-nodes may themselves also contain a number of sub-nodes which make up the parts of the rip. In summary, a tree representation can be made of a board with rips and parts. Stacking may be more convenient by jumping from one rip to another rip via a jump command in order to obtain both rips without waiting for other rips that are in between the two rips.

An alternative to the tree structure is the of data files such as XML files wherein each board is defined by a set of tags with the dimensions and characteristics as parameters of that tag. A strip is also defined as a set of parameters with characteristics and dimensions set as parameters of the tags and also the parts can be stored similarly. The part tags can be nested within rip tags, which in turn can be nested within board tags. The advantage of such a structured storage is that it is easier to process for computing devices or processor which is in control of a cutting device. In particular, storing the optimized layout in such a format enables the generation and transmission of instructions to the cutting device or its control interface as if these instructions were entered manually by a user of the system via a dedicated control panel.

### Intelligent Cutting:

Cutting machines always handle patterns in a three structure way, level by level, with the exception of ab ba cutting. If you have several books (stacks) of the same layout, then for each even book the strip sequence is inverted so that the last strip(s) from a previous book can be cut, for the second level, together with the first of the current book. This is only applied in automatic angular beam saws (2 axis) where books are mirrored so that the last strips from a book can be cut together with the first strips of the next book or small strips are kept aside in 1 buffer to be then cut all together.
A) Cutting method.
   Methodology consisting of techniques in order to cut per cutting pass as much layers of material as possible in order to reduce the total number of cuts and so maximize machine cutting output. Applicable on mono cutting line machines, multi cutting line machines and machine combinations. The methodology optionally also looks to meet specific individual parts orientation cutting sequence and multi material combinations ex. (Laminated products).
   1) Some notes how it could be selected in the software later on.
      Full Pattern joining :
      a. Allow stacking of patterns of different materials. Yes/No
      b. Allow stacking of patterns only when all level 1 cuts widths are the same. Y/
         No=Allow stacking of patterns with different section (block) of :
         1. A number of different strips
         2. A total number of strips
         2. A distance of different strips
         3. A weight of the different section
         With or without control of machine unloading stacking locations.
         If on a level strips are cut together but if different in next level, then for the next cutting phase (re-cutting), rips need to be de-stacked. + (re)sorting of levels and layouts
      Second level strip joining
      c. Allow strips to be cut together or up to x patterns away (rip distance). Any strip which occurs in a pattern can wait until an equal rip comes.
         A limit to waiting rips is set depending user acceptance and on available locations.
      Lower level strip joining.
      d. Join re-cuts (level 3 to level n) within the same sheet pattern or between different sheet patterns.
   2) Cutting patterns where some strips simply do not occur. If a sheet full of parts is needed and an extra sheet is needed with the same sizes but les, then it may be allowed to cut sheets together and so having too many parts. In this way an extra cutting cycle is avoided.
      On the above handling criteria need to be added:
      Efficiency optimization taking into account the time it needs for 'inter cutting' storage.
      Numerical limitation table
      Level 0= pattern 1= first cutting direction, 2= cross-cut of strip, 3=re-cut, 4=turn & cut. 5=...
      m)inimum M)aximum
      m M Level / Max dist /mKg/MKg / minL / minW/ Max L/ MaxW / Machine
      F From /ex. in patterns / / / / /
      Some re-cuts or operations may be combined with the use of another saw, linked or not, for this purpose user can select machine.
B) Strip temporary storage:
   Strips which are not immediately cut in sequence with the others in order to be cut with upcoming ones need to be stored in an efficient, not time consuming, for storage and retrieval, way. Several approaches are here applicable:
   -) Level storage, horizontal panel strip storage, fixed or moving.
   -) Angle storage, vertical or in a light angle panel strip storage.
   -) Horizontal storage with manual or x/y positioning or a combination
   -) Vertical 'Hedgehog' storage. / / / / / /

   These locations may be stationary, signaled or not, or moving, presenting the to be used location to the operator.
C) Temporary Formats
   Based on experience of consumption, leftovers also called off-cuts, may be stored. Each left over gets an identification when cut. The operator stores the part on a location with a location identification. The combination of both identifies the Temporary format's location. This allows the I.C. system to instruct the operator where to find the T.F.. If for any other purpose a T.F. is needed for a different or other job, a database management based system will notify the user of the T.F. if it was planned (reserved) for a job or not. This notification together with miss use signals will be done over colored light signals or different sound messages.
D) Inkey
   Module to allow the above on existing or not prepared for machines without having to modify anything on the programming of the (existing) machine. Any cutting machine with at least 1 positioning CNC axis has a way to program 1 cut or a sequence of cuts, so called manual mode. This is the modus that the In Key module wants to use in order to achieve the above on existing and new post equip able machines. In stead of having to follow the machines cutting method for programmable patterns, the user can, with this solution cut anything without any complexity limitation. The method and logic of cutting comes from the new software environment, the existing machine logic is denied by using the machines 'manual' method. Inkey modules allow the Intelligent Cutting software to program (instruction input) the old machine over the 'user' interface, keyboard and mouse. The Intelligent cutting program's post processor generates the data input (keyboard, mouse or other input devices like keypad's and function key's), the Inkey module converts the data to physical signals of the corresponding devices and may so be for each device parallel connected.
   This Inkey interface module may also be used for other data entry between systems with similar hardware set-up.
E) Sheet Optimisation (nesting) software and techniques that specifically optimize and look for the achievement of such patterns for structured cutting. Also such method can optionally respect parts depended cutting and cutting orientation.
F) Parts depended cutting: user can specify per part the orientation Length or Width on which the part needs to leave the machine (receive the last cut), the level and which side should not be cut during the first cutting process or left together with scrap, rest or other parts to meet a minimum size for manufacturing purposes (ex. Edge or other profile operations).
G) Data storage, based on a tree or level structure with on each branch a knot ID. This ID may be followed by a stop flag or an execution flag followed by other ID's referring to these rips to be jointly cut. Or any data structure that allows the same operation.
H) Parts cutting process for material - combined parts, ex. Laminated products. The intelligent cutting system gets or detects these parts as 2 or 3 elements, entered as 1 part with several properties or as 3 elements with a common ID. First the most expensive element, mostly top layer, is optimized for all parts that also have the same bottom or backing material. Based on this grouping 'sub-sheets' are created. Then these sub-sheets are doubled for the bottom element. By this all sub-elements for top and bottom layer of parts is created with just oversize on the edge and not an oversize for each individual part.
   Next step is optimizing the 'sub-sheets' with size reduction from the structural, central material with smaller oversize. Top - central material - Bottom material are then assembled (glued pressed or not). The intelligent cutting system produces for each sub-sheet a standalone cutting pattern or a pattern set (linked). These can then also be linked using the intelligent stacked sequence cutting.

## Claims

1. A method for controlling the cutting of a first strip out of a first board and a second strip out of said first board or out of a second board, said method comprising providing a control module, said control module providing an instruction to process said first board and said second board or to process said first strip and said second strip simultaneously,
**characterized in that** said control module provides instructions for temporary storage and retrieval from storage of said first strip until cutting of at least said second strip out of said first board or out of said second board has occurred, and provides instructions to stack and/or align said first board and said second board or to stack and/or align said first strip and said second strip for processing, even if said processing of said first board and said second board is not identical and/or said processing of said first strip and said second strip is not identical.

2. The method for controlling the cutting as defined in claim 1, further **characterized in that** said method comprises providing a conversion device receiving one or more instructions from said control module and providing said one or more instructions to a cutting device's control interface.

3. The method for controlling the cutting as defined in claim 2, further **characterized in that** said conversion device converts said one or more instructions into one or more converted instructions, said one or more converted instructions being in a format interpretable by said cutting device, and provides said converted instructions to said control interface.

4. The method for controlling the cutting as defined in claim 1, further **characterized in that** said method comprises optimizing a cutting plan.

5. The method for controlling the cutting as defined in claim 4, further **characterized in that** said optimizing the cutting plan comprises altering the orientation of one or more strips and/or parts in a layout and taking into account the user preference of part orientation at cutting or the level and which side should not be cut during a first cutting process or should be left together with scrap, rest or other parts to meet a minimum size for manufacturing purposes.

6. The method for controlling the cutting as defined in claim 5, further **characterized in that** said optimizing comprises generating one or more sub-sheets of parts for a multi-layer product, each of said sub-sheets being adapted to one of said layers.

7. The method for controlling the cutting as defined in claim 6, further **characterized in that** said optimizing comprises storing optimized cutting sequences.

8. The method for cutting as defined in any of the foregoing claims , further **characterized in that** said stacking and/or aligning is based on one or more of the following:
- acceptability of stacking and/or aligning strips out of different kinds of materials;
- acceptability of stacking strips and/or aligning with different further processing requirements;
- acceptability of sorting parts and strips within layouts; - acceptability of reordering layouts;
- acceptability of unneeded strips;
- acceptability of optional strips and/or parts;
- acceptability of changing the parts orientation with the last cut;
- maximum stack height; - maximum height and/or width of boards, strips or parts;
- maximum weight of boards, strips or parts;
- the maximum number of strips between the last strip added to a stack and the next strip to be added to the stack; - the time delay between adding two strips to a stack; and
- the maximum number of cutting operations between adding two strips to a stack.

## Patentansprüche

1. Verfahren zur Steuerung des Zuschnitts eines ersten Streifens aus einer ersten Platte und eines zweiten Streifens aus der besagten ersten Platte oder aus einer zweiten Platte, wobei das besagte Verfahren die Beistellung eines Steuermoduls umfasst, und das besagte Steuermodul einen Befehl zur Bearbeitung der besagten ersten Platte und der besagten zweiten Platte oder zur Bearbeitung des besagten ersten Streifens und des besagten zweiten Streifens zur selben Zeit beisteuert,
**dadurch gekennzeichnet, dass** das besagte Steuermodul Befehle zur Zwischenablage und zur Entnahme des besagten ersten Streifens aus der Ablage beisteuert, bis der Zuschnitt des besagten zumindest zweiten Streifens aus der besagten ersten Platte oder aus der besagten zweiten Platte erfolgt ist, und Befehle zum Stapeln und/ oder Ausrichten der besagten ersten Platte und der besagten zweiten Platte, oder zum Stapeln und/ oder Ausrichten des besagten ersten Streifens und des besagten zweiten Streifens zur Bearbeitung beisteuert, selbst dann, wenn die besagte Bearbeitung der besagten ersten Platte und der besagten zweiten Platte nicht identisch ist, und/ oder die besagte Bearbeitung des besagten ersten Streifens und des besagten zweiten Streifens nicht identisch ist.

2. Verfahren zur Steuerung des Zuschnitts nach Anspruch 1, ferner **dadurch gekennzeichnet, dass** das besagte Verfahren die Beistellung eines Umformgeräts zum Empfang von einem oder mehreren Befehlen aus dem besagten Steuermodul umfasst, sowie die Beistellung von dem besagten einen oder mehreren Befehlen für die Bedienoberfläche eines Schneidgerätes.

3. Verfahren zur Steuerung des Zuschnitts nach Anspruch 2, ferner **dadurch gekennzeichnet, dass** das besagte Umformgerät den besagten einen oder die mehreren Befehle in einen oder mehrere umgewandelte Befehle umwandelt, wobei der eine oder die mehreren umgewandelten Befehle in einem Format ausgegeben werden, das vom besagten Schneidgerät deutbar ist, und es die besagten umgewandelten Befehle der besagten Bedienoberfläche zur Verfügung stellt.

4. Verfahren zur Steuerung des Zuschnitts nach Anspruch 1, ferner **dadurch gekennzeichnet, dass** das besagte Verfahren die Optimierung eines Schnittplans umfasst.

5. Verfahren zur Steuerung des Zuschnitts nach Anspruch 4, ferner **dadurch gekennzeichnet, dass** die besagte Optimierung des Schnittplans die Veränderung der Ausrichtung von einem oder mehreren Streifen und/ oder Teilen in einem Layout umfasst, sowie die Berücksichtigung der Präferenz des Benutzers für die Ausrichtung der Teile beim Zuschnitt oder des Niveaus und welche Seite bei der ersten Zuschnittbearbeitung nicht zugeschnitten wird, oder zusammen mit dem Abfall, dem Rest oder den anderen Teilen verbleiben sollte, um für Fertigungszwecke eine Mindestgröße aufzuweisen.

6. Verfahren zur Steuerung des Zuschnitts nach Anspruch 5, ferner **dadurch gekennzeichnet, dass** die besagte Optimierung die Generierung von einer oder mehreren Sub-Folien von Teilen für ein mehrschichtiges Produkt umfasst, wobei jede der besagten Sub-Folien einer der besagten Schichten angepasst ist.

7. Verfahren zur Steuerung des Zuschnitts nach Anspruch 6, ferner **dadurch gekennzeichnet, dass** die besagte Optimierung die Speicherung der optimierten Schnittsequenzen umfasst.

8. Verfahren zum Zuschneiden nach irgendeinem der vorherigen Ansprüche, ferner **dadurch gekennzeichnet, dass** das besagte Stapeln und/ oder Ausrichten auf einem oder mehreren der folgenden Parameter basiert:
- die Vertretbarkeit des Stapelns und/ oder Ausrichtens von Streifen aus verschiedenen Materialarten;
- die Vertretbarkeit des Stapelns von Streifen und/ oder des Ausrichtens mit verschiedenen weiteren Bearbeitungsanforderungen;
- die Vertretbarkeit des Sortierens von Teilen und Streifen innerhalb der Layouts;
- die Vertretbarkeit der Umordnung der Layouts;
- die Vertretbarkeit von unnötigen Streifen;
- die Vertretbarkeit von optionalen Streifen und/ oder Teilen;
- die Vertretbarkeit der Änderung der Ausrichtung der Teile mit dem letzten Schnitt;
- die maximale Stapelhöhe;
- die maximale Höhe und/ oder Breite der Platten, Streifen oder Teile;
- das maximale Gewicht der Platten, Streifen oder Teile;
- die maximale Anzahl an Streifen zwischen dem letzten zum Stapel hinzugefügten Streifen und dem nächsten zum Stapel hinzuzufügenden Streifen;
- die Zeitverzögerung zwischen dem Hinzufügen von zwei Streifen zu einem Stapel; und
- die maximale Anzahl an Schnittvorgängen zwischen dem Hinzufügen von zwei Streifen zum einem Stapel.

## Revendications

1. Procédé pour commander la découpe d'une première bande d'une première planche et d'une deuxième bande de ladite première planche ou d'une deuxième planche, ledit procédé comprenant la fourniture d'un module de commande, ledit module de commande fournissant une instruction pour traiter ladite première planche et ladite deuxième planche ou pour traiter ladite première bande et ladite deuxième bande simultanément,
**caractérisé en ce que** ledit module de commande fournit des instructions de stockage temporaire et de récupération de ladite première bande du stockage jusqu'à ce que la découpe d'au moins ladite deuxième bande de ladite première planche ou de ladite deuxième planche intervienne, et fournit des instructions pour empiler et/ou aligner ladite première planche et ladite deuxième planche ou pour empiler et/ou aligner ladite première bande et ladite deuxième bande en vue du traitement, même si ledit traitement de ladite première planche et de ladite deuxième planche n'est pas identique et/ou ledit traitement de ladite première bande et de ladite deuxième bande n'est pas identique.

2. Procédé pour commander la découpe selon la revendication 1, **caractérisé en outre en ce que** ledit procédé comprend la fourniture d'un dispositif de conversion recevant une ou plusieurs instructions dudit module de commande et la fourniture desdites une ou plusieurs instructions à une interface de commande d'un dispositif de découpe.

3. Procédé pour commander la découpe selon la revendication 2, **caractérisé en outre en ce que** ledit dispositif de conversion convertit lesdites une ou plusieurs instructions en une ou plusieurs instructions converties, lesdites une ou plusieurs instructions converties étant dans un format interprétable par ledit dispositif de découpe, et fournit lesdites instructions converties à ladite interface de commande.

4. Procédé pour commander la découpe selon la revendication 1, **caractérisé en outre en ce que** ledit procédé comprend l'optimisation d'un plan de découpe.

5. Procédé pour commander la découpe selon la revendication 4, **caractérisé en outre en ce que** ladite optimisation du plan de découpe comprend l'altération de l'orientation d'une ou plusieurs bandes et/ou parties dans un agencement et la prise en compte de la préférence de l'utilisateur en ce qui concerne l'orientation des parties à la découpe ou le niveau et le côté à ne pas découper au cours d'un premier processus de découpe ou à laisser avec le rebut, le reste ou les autres parties pour respecter une taille minimale à des fins de fabrication.

6. Procédé pour commander la découpe selon la revendication 5, **caractérisé en outre en ce que** ladite optimisation comprend la génération d'une ou plusieurs sous-feuilles de parties pour un produit multicouche, chacune desdites sous-feuilles étant adaptée à l'une desdites couches.

7. Procédé pour commander la découpe selon la revendication 6, **caractérisé en outre en ce que** ladite optimisation comprend le stockage de séquences de découpe optimisées.

8. Procédé de découpe selon l'une quelconque des revendications précédentes, **caractérisé en outre en ce que** ledit empilement et/ou ledit alignement sont basées sur un ou plusieurs de ce qui suit :
- l'acceptabilité de l'empilement et/ou de l'alignement de bandes de différents types de matériaux ;
- l'acceptabilité de l'empilement et/ou de l'alignement de bandes avec d'autres exigences de traitement différentes ;
- l'acceptabilité du tri de parties et de bandes dans des agencements ;
- l'acceptabilité de la réorganisation d'agencements ;
- l'acceptabilité de bandes non nécessaires ;
- l'acceptabilité de bandes et/ou de parties facultatives ;
- l'acceptabilité du changement de l'orientation des parties avec la dernière découpe ;
- la hauteur maximale d'empilement ;
- la hauteur maximale et/ou la largeur maximale de planches, de bandes ou de parties ;
- le poids maximal de planches, de bandes ou de parties ;
- le nombre maximal de bandes entre la dernière bande ajoutée à un empilement et la bande suivante à ajouter à l'empilement ;
- le délai de temps entre l'ajout de deux bandes à un empilement ; et
- le nombre maximal d'opérations de découpe entre l'ajout de deux bandes à un empilement.
